# EUROPÄISCHE PATENTSCHRIFT

(11) **EP 1 070 904 B1**
(45) Veröffentlichungstag und Bekanntmachung des Hinweises auf die Patenterteilung: **02.02.2005**
(21) Anmeldenummer: 00810585.0
(22) Anmeldetag: 05.07.2000
(51) Int. Cl.: F16L 55/033

(54) **Montagewinkel**
Mounting bracket
Support de montage

(30) Priorität: 22.07.1999 DE 19934429
(43) Veröffentlichungstag der Anmeldung: 24.01.2001
(73) Patentinhaber: HILTI Aktiengesellschaft, 9494 Schaan (LI)
(72) Erfinder: Fritz, Hermann, 86899 Landsberg (DE)
(74) Vertreter: Wildi, Roland

(56) Entgegenhaltungen:
- DE-A- 2 458 813
- DE-A- 2 558 271
- DE-A- 2 926 623
- DE-A- 4 040 539
- DE-U- 8 707 806
- US-A- 4 141 528

## Beschreibung

Die Erfindung betrifft einen Montagewinkel, beispielsweise zur Befestigung von Blechkanälen und dergleichen, gemäss dem Oberbegriff des Patentanspruchs 1.

In der Installationstechnik, insbesondere in der Lüftungstechnik, kommen Montagewinkel in L- und Z-Form zum Einsatz, die vielfach zur Befestigung und Abhängung von Blechkanälen und dergleichen dienen. Die Montagewinkel werden vielfach an Schienensystemen befestigt, die an der Decke oder an einer Wand angeordnet sind. Sie können aber auch direkt an die Decke oder an eine Wand montiert werden. Zur Vermeidung von Körperschallübertragungen ist der Anbindungsbereich des Montagewinkels, beispielsweise an eine Montageschiene, mit schalldämmenden Einrichtungen versehen. Dazu kann beispielsweise ein Gummistöpsel oder ein Einsatz aus einem Elastomer vorgesehen sein, der an einem Schenkel des Montagewinkels angebracht ist und für eine schalldämmende Entkopplung zwischen dem Montagewinkel und einer Befestigungsschraube oder -klemme sorgt, die zur Montage des Montagewinkels an der Montageschiene dient. Zum Fixieren des Montagewinkels muss das Befestigungselement, beispielsweise eine Schraube oder eine Klemme, vielfach relativ fest angezogen werden. Dabei wird der Schallschutzstöpsel oder -einsatz vielfach so stark gequetscht, dass seine Schalldämmwirkung grösstenteils verloren geht.

Aus der DE 87 07 806 U1 ist ein Montagewinkel zur Befestigung von Blechkanälen mit einem Z-förmigen Winkelteil bekannt, das drei, mit Bohrungen versehene Schenkel aufweist. Einer der Schenkel ist in einem Gehäuse gehalten, das als Boden- und Deckplatte zwei Metallscheiben aufweist. Die Boden- und Deckplatte des Gehäuses weisen jeweils eine Bohrung auf, die von einem in das Innere des Gehäuses gezogenen Kragen berandet ist. Das Gehäuse umschliesst einen schlauchförmigen Gummidämpfer, der über den innerhalb des Gehäuses angeordneten Bereich des Schenkels gezogen ist und diesen allseitig im Abstand gegenüber dem Gehäuse lagert.

Nachteilig an der bekannten Lösung ist, dass das Gehäuse des einmal befestigten Montagewinkels keine Verstellmöglichkeiten aufweist, was ein genaues Montieren erfordert und ein nachträgliches Justieren der Bohrungen verunmöglicht.

Aufgabe der vorliegenden Erfindung ist es daher, einen Montagewinkel zu schaffen, der an einer Montageschiene oder direkt am Untergrund montierbar ist, ohne dass dabei die Schalldämmwirkung von mit dem Winkel verbundenen schalldämmenden Einrichtungen verloren geht. Der Montagewinkel soll ohne Zusatzteile, wie z. B. Unterlegplatten, Zwischenplatten oder dergleichen, an Montageschienen befestigbar sein. Der Montagewinkel soll auch eine gewisse Verstellmöglichkeit bieten, beispielsweise um bei Armierungstreffern die Montageposition am Lüftungskanal beibehalten zu können oder um eine nachträgliche Justiermöglichkeit von Kanalabständen und dergleichen zu bieten. Dabei soll der Montagewinkel einfach und kostengünstig in der Herstellung und in seiner Montage sein.

Die Lösung dieser Aufgaben besteht in einem Montagewinkel mit den im kennzeichnenden Abschnitt des Patentanspruchs 1 angeführten Merkmalen. Bevorzugte Ausführungsvarianten bzw. Weiterbildungen der Erfindung sind Gegenstand der abhängigen Patentansprüche. Der Montagewinkel gemäss der Erfindung dient beispielsweise zur Befestigung von Kanälen aus Kunststoff oder Blech, Kleinaggregaten der Lüftung und dergleichen. Er umfasst ein Winkelteil mit wenigstens zwei, mit Bohrungen versehenen Schenkeln. Einer der Schenkel ist in einem käfigartigen Gehäuse gehalten, das eine Boden- und eine Deckplatte mit zueinander umgelegten Längsrändern aufweist, die im Abstand voneinander angeordnet sind. Das käfigartige Gehäuse umschliesst wenigstens ein schalldämmendes Element, das den innerhalb des Gehäuses angeordneten Bereich des Schenkels wenigstens bereichsweise umgibt und allseitig im Abstand gegenüber dem Gehäuse lagert. Die Boden- und Deckplatte des käfigartigen Gehäuses weisen jeweils eine Bohrung auf. Die einander axial gegenüberliegenden Bohrungen sind mit in das Innere des Gehäuses gezogenen Kragen versehen, deren axialer Abstand voneinander im wesentlichen dem Abstand der Längsränder des Gehäuses entspricht. Der innerhalb des Gehäuses angeordnete Bereich des Schenkels ist mit einem Langloch ausgestattet, das breiter ist als der Aussendurchmesser der die Bohrungen in der Boden- und Deckplatte berandenden Kragen.

Die an den Längsrändern des käfigartigen Gehäuses verlaufenden, umgelegten Ränder dienen zur Begrenzung des Zusammenpressens des Schallschutzelements bei der Befestigung des Montagewinkels beispielsweise an einer Montageschiene oder am Untergrund. Die Ränder können aber nicht verhindern, dass der Mittenbereich des käfigartigen Gehäuses durch die Befestigungsschraube deformiert und dadurch das Schallschutzelement über Gebühr zusammengepresst wird. Die gemäss der Erfindung in das Innere des Gehäuses gezogenen Kragen beheben diesen Nachteil und begrenzen bei der Montage des Montagewinkels das Zusammenpressen des innerhalb des käfigartigen Gehäuses angeordneten Schallschutzelements auch im Mittenbereich. Der Abstand der Kragen voneinander entspricht dem Abstand der Längsränder voneinander. Dadurch wird das Gehäuse gleichmässig zusammengespannt und eine Verformung durch die im Mittenbereich angreifende Montageschraube ist verhindert. Die maximale Kompression des Schallschutzelements ist durch den Abstand der Kragen voneinander bestimmt, die ein weiteres Verspannen verhindern, sobald sie aneinander anliegen. Dadurch kann die Montageschraube zuverlässig mit einem vorgegebenen Drehmoment angespannt werden. Der im Gehäuse abgestützte Schenkel weist ein Langloch auf, das allseitig grösser ist als die Bohrungen in der Grund- und Deckplatte. Auf diese Weise ist zuverlässig verhindert, dass es beim Verspannen des Gehäuses zu Berührungen zwischen dem Winkelteil und den nach innen gezogenen Kragen kommt. Durch das Langloch im innerhalb des Gehäuses gelagerten Schenkel sind die Voraussetzungen für eine relative Verschiebbarkeit zwischen dem Winkelteil und dem Gehäuse gegeben, ohne dass es dadurch zu Beeinträchtigungen der Körperschalldämmung kommt.

Zur Vermeidung einer übermässigen Kompression des Schallschutzelements erweist es sich von Vorteil, wenn der axiale Abstand der Kragen voneinander die Wandstärke des Schenkels nicht wesentlich überschreitet.

Vorzugsweise sind innerhalb des käfigartigen Gehäuses zwei schalldämmende Elemente angeordnet, die beispielsweise aus Gummi oder aus einem Elastomer bestehen. Die zwei schalldämmenden Elemente sind etwa leistenartig ausgebildet und weisen je eine Längsnut auf. Die Längsnut dient zur Aufnahme der dem jeweiligen schalldämmenden Element zugekehrten Längsseite des innerhalb des Gehäuses angeordneten Bereichs des Schenkels. Insbesondere ist der Schenkel auf diese Weise verschieblich gelagert. Die leistenförmig ausgebildeten, schalldämmenden Elemente sind beispielsweise extrudierte Gummiprofile, die auf die erforderliche Erstreckung abgelängt sind. Im Vergleich zu den üblicherweise eingesetzten, bekannten Form-Spritzteilen sind der Aufwand und die Kosten für die Herstellung dadurch erheblich reduziert.

Zur Verbesserung der Relatiwerschiebbarkeit zwischen dem käfigartigen Gehäuse und dem darin gelagerten Schenkel des Montagewinkels sind die durch die Längsnut gebildeten Gleitflächen des schalldämmenden Elements mit einer reibungsmindernden Beschichtung versehen. Die verminderte Reibung zwischen dem Schenkel und den leistenartigen Gummiprofilen hat auch den Vorteil, dass die Gummiprofile nicht so leicht aus dem Gehäuse geschoben werden können. Dies wird auch dadurch unterstützt, dass die Boden- und die Deckplatte des Gehäuses unter leichter Vorspannung der Gummiprofile zusammenmontiert sind. Zur zusätzlichen Sicherung der leistenartigen Gummiprofile ragen von der Boden- und/oder der Deckplatte Vorsprünge ab, die sich in die Gummiprofile graben und als zusätzliche Verschiebesicherung dienen.

Fertigungstechnisch erweist es sich als vorteilhaft, wenn die Boden- und die Deckplatte identisch ausgebildet sind und jeweils an einer Längsseite einen abragenden Einhängeriegel und auf der gegenüberliegenden Seite eine dazu korrespondierende Aussparung aufweist. Die Boden- und Deckplatte werden üblicherweise in der gewünschten Rohform aus einem Blechteil ausgestanzt. Die erforderlichen Abprägungen und dergleichen können vor oder nach dem Ausstanzen angebracht werden. Danach werden die Teile in die gewünschte Form gebogen. Indem die Boden- und die Deckplatte identisch ausgebildet sind, vereinfacht sich der Herstellungsprozess. Die Verriegelungselemente der beiden halbschalenartigen Teile sind sehr einfach nach dem Prinzip Schlüssel-Schlüsselloch bzw. Einhängeriegel-Aussparung ausgebildet, was sich weiterhin vorteilhaft auf den Herstellprozess auswirkt.

Die Aussenflächen der Boden- und Deckplatte des Gehäuses weisen bei einander berührenden Längsrändern einen axialen Abstand voneinander auf, der grösser ist als die Länge des Einhängeriegels. Dadurch ist sichergestellt, dass auch im vollständig verspannten Zustand des käfigartigen Gehäuses keine Teile die Aussenflächen des Gehäuses überragen.

Zur Begrenzung der Relatiwerschiebbarkeit zwischen dem Schenkel und dem käfigartigen Gehäuse ist es zweckmässig, wenn das freie Ende des Schenkels wenigstens einen, vorzugsweise abgeprägten, Anschlag aufweist. Dadurch wird verhindert, dass der Schenkel unbeabsichtigt aus dem käfigartigen Gehäuse geschoben wird.

Damit die Relatiwerschiebung zwischen dem Gehäuse und dem darin gelagerten Schenkel ohne Hilfsmittel erfolgen kann, ist die Klemmkraft des innerhalb des Gehäuses angeordneten schalldämmenden Elements auf den Schenkel derart bemessen, dass der Schenkel gegenüber dem Gehäuse im unbelasteten Zustand von Hand verschiebbar ist.

Im folgenden wird die Erfindung unter Bezugnahme auf ein in den Fig. schematisch dargestelltes Ausführungsbeispiel näher erläutert. Es zeigen in unterschiedlichen Massstäben:
- Fig. 1: eine perspektivische Darstellung eines erfindungsgemässen Montagewinkels;
- Fig. 2: eine perspektivische Darstellung der Komponenten des Montagewinkels;
- Fig. 3: eine Seitenansicht des Montagewinkels aus Fig. 1; und
- Fig. 4: eine Frontansicht des Montagewinkels aus Fig. 1.

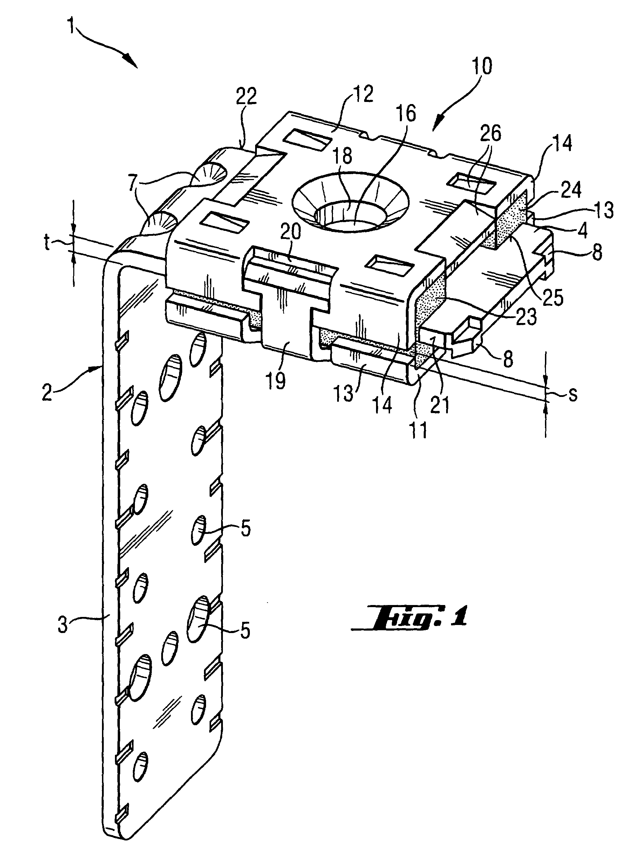

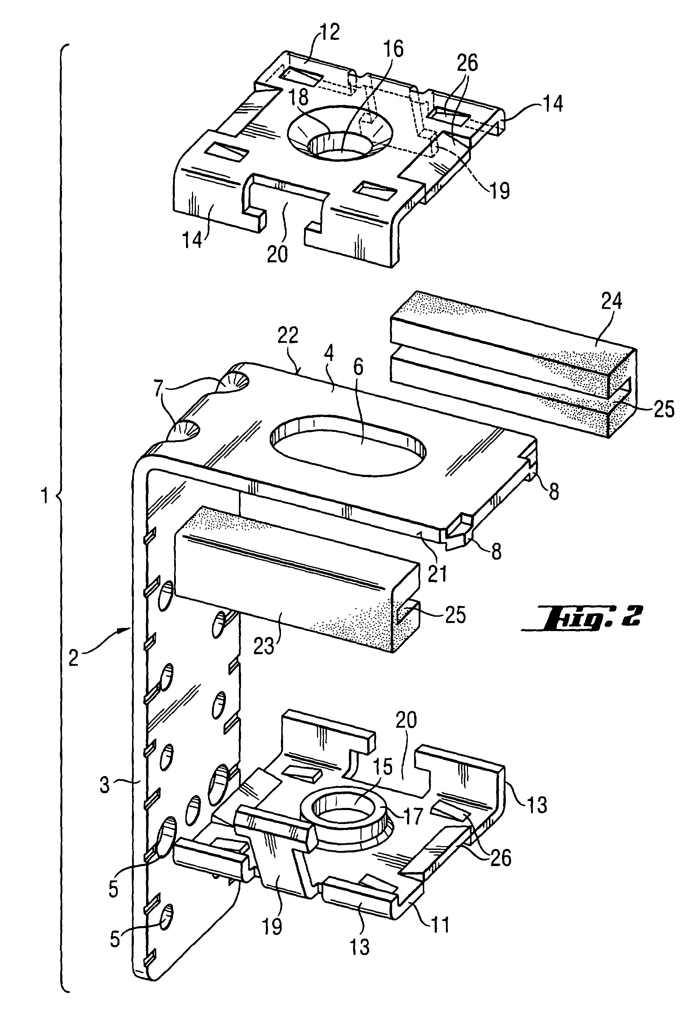

Der in den Fig. 1 - 4 in verschiedenen Ansichten dargestellte Montagewinkel trägt gesamthaft das Bezugszeichen 1. Er umfasst ein Winkelteil 2, das gemäss dem dargestellten Ausführungsbeispiel L-förmig ausgebildet ist und einen langen Schenkel 3 und einen, vorzugsweise im rechten Winkel dazu verlaufenden, kurzen Schenkel 4 aufweist. An der Knickstelle des Winkelteils 2 sind Verstärkungssicken 7 vorgesehen. Die beiden Schenkel 3, 4 des Winkelteils sind mit Bohrungen 5, 6 versehen. Die Bohrungen 5 im langen Schenkel 3 weisen beispielsweise verschieden grosse Bohrungsdurchmesser auf, damit der Anwender, je nach Anforderung, Schrauben unterschiedlicher Stärke für die Befestigung an einem Bauteil, beispielsweise an einem Lüftungskanal, einsetzen kann. Am kurzen Schenkel 4 ist ein Langloch 6 vorgesehen (Fig. 2). Der kurze Schenkel 4 ist in einem käfigartigen Gehäuse 10 gelagert, welches zur Schallentkopplung zwischen einem mit dem Montagewinkel verbundenen Bauteil, beispielsweise einem Lüftungskanal, und dem Untergrund, beispielweise einer Wand oder einer Decke, dient. Wie insbesondere aus Fig. 2 ersichtlich ist, besteht das Gehäuse des Schallschutzkäfigs 10 aus einer Bodenplatte 11 und einer Deckplatte 12. Die Bodenplatte 11 und die Deckplatte 12 sind identisch ausgebildete Bauteile und besitzen jeweils umgelegte Längsränder 13, 14. Die Boden- und Deckplatte 11, 12 weisen je eine Bohrung 15, 16 auf, die von einem axial verlaufenden Kragen 17, 18 berandet ist. Die Kragen 17, 18 ragen etwa in die gleiche Richtung ab wie die umgelegten Längsränder 13, 14 der Bodenund Deckplatte 11, 12. Die Bohrungen 15, 16 sind mit Ansenkungen versehen, die den Kopf einer durchgesteckten Schraube aufnehmen. Die Ansenkungen entstehen beim Ziehen des Kragens 17, 18 als Aussenradius der Biegung zwangsläufig.

Die Boden- und Deckplatte 11, 12 sind jeweils mit Verriegelungselementen ausgestattet, die aus einem Einhängeriegel 19 und einer Aussparung 20 bestehen. Der Einhängeriegel 19 und die Aussparung 20 sind dabei an einander gegenüberliegenden Längsseiten eines Bauteils angeordnet. Zur Verbindung der Boden- und der Deckplatte 11, 12 werden die beiden Bauteile derart übereinander angeordnet, dass der Einhängeriegel 19 der Bodenplatte 11 der Aussparung 20 der Deckplatte 12 gegenüberliegt und umgekehrt. Dadurch werden die beiden Bauteile 11, 12 an beiden Längsseiten in identischer Weise miteinander verbunden, indem die Einhängeriegel 19 seitlich in die Aussparungen 20 eingebogen werden.

Innerhalb des käfigartigen Gehäuses 10 sind zwei schalldämmende Elemente 23, 24 angeordnet, die vor der Montage der Boden- und Deckplatte 11, 12 parallel zu den herabgezogenen Längsrändern 13, 14 eingelegt werden. Die schalldämmenden Elemente 23, 24 sind etwa leistenartig ausgebildet und bestehen beispielsweise aus Gummi oder einem Elastomer. In Längsrichtung der schalldämmenden Elemente verläuft jeweils eine Nut 25. Die Anordnung der schalldämmenden Elemente 23, 24 innerhalb des käfigartigen Gehäuses 10 ist derart, dass die Nuten 25 einander zugekehrt sind. Im montierten Zustand sind die Längsränder 21, 22 des kurzen Schenkels 4 innerhalb der Nuten 25 der schalldämmenden Elemente 23, 24 gelagert. Von den Innenflächen der Boden- und Deckplatte 11, 12 abragende Vorsprünge 26 dienen zur Fixierung der schalldämmenden Elemente 23, 24 innerhalb des käfigartigen Gehäuses 10.

Im vormontierten Zustand befinden sich die schalldämmenden Elemente 23, 24 innerhalb des käfigartigen Gehäuses 10 unter einer geringen Vorspannung. Diese ist ausreichend gross, um die Boden- und Deckplatte 11, 12 zuverlässig zu verriegeln. Andererseits ist die Klemmkraft der schalldämmenden Elemente 23, 24 auf die Längsränder 21, 22 des kurzen Schenkels 4 gerade so gross, dass der Schenkel 4 von Hand gegenüber dem käfigartigen Gehäuse 10 verschiebbar ist. Die durch die Nuten 25 gebildeten Gleitflächen der schalldämmenden Elemente können zusätzlich noch mit einer reibungsmindernden Beschichtung versehen sein, um eine relativ leichte Verschiebbarkeit des Winkelteils 2 zu gewährleisten. Am freien Ende des kuzen Schenkels 4 sind zwei Abprägungen 8 vorgesehen, die als Anschläge zur Begrenzung der Verschiebbarkeit dienen und verhindern, dass das schalldämmende, käfigartige Gehäuse 10 vom kurzen Schenkel 4 herunterfällt.

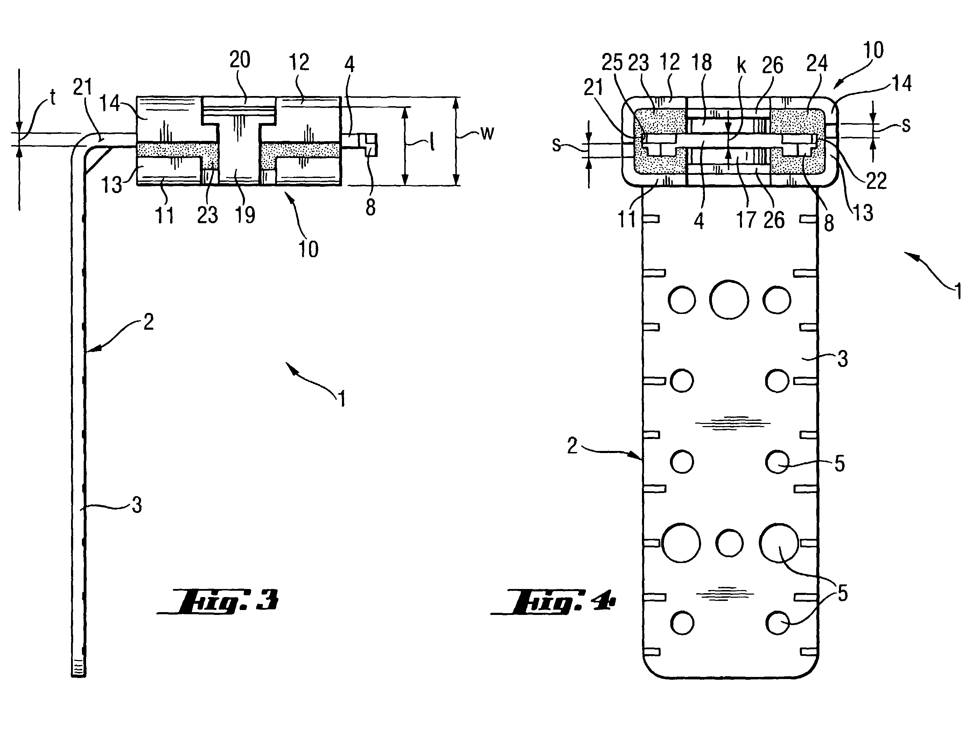

Wie insbesondere aus Fig. 1 ersichtlich ist, weisen die umgelegten Längsränder 13, 14 der Boden- und Deckplatte 11, 12 im vormontierten Zustand voneinander einen axialen Abstand s auf. Der Abstand s der Längsränder 13, 14 ist nicht wesentlich grösser als die Wandstärke t (Fig. 3) des kurzen Schenkels 4 und kann dieser in einer bevorzugten Variante der Erfindung etwa entsprechen. Die ins Innere des käfigartigen Gehäuses 10 gezogenen Kragen 17, 18 liegen im vormontierten Zustand einander gegenüber und weisen voneinander einen axialen Abstand k (Fig. 4) auf, der im wesentlichen mit dem Abstand s der umgelegten Längsränder 13, 14 übereinstimmt. Das Langloch 6 im kurzen Schenkel 4 (Fig. 2) ist breiter als der Aussendurchmesser der Kragen 17, 18. Die Länge des Langlochs 6 ist derart bemessen, dass auch bei einer durch die Anschläge 8 vorgegebenen maximalen Verschiebung des Schenkels 4 innerhalb des käfigartigen Gehäuses 10 die Kragen 17, 18 nicht in Anlage zu den Rändern des Langlochs 6 kommen.

Zur Befestigung des Montagewinkels an einer Montageschiene oder unmittelbar an einer Wand oder Decke wird ein Befestigungselement, beispielsweise eine Schraube oder ein Anker, durch die axial übereinander liegenden Bohrungen 15, 16 im Schallschutzkäfig 10 und das Langloch 6 im kurzen Schenkel 4 gesteckt. Solange die Schraube nicht fest angezogen ist, kann der kurze Schenkel 4 innerhalb des Schallschutzkäfigs 10 verschoben werden, um eine genaue Ausrichtung zu ermöglichen. Nachdem dies erfolgt ist, wird der Montagewinkel 1 endgültig fixiert. Dabei werden die Boden- und die Deckplatte 11, 12 des Schallschutzkäfigs 10 soweit zusammengepresst, bis die umgelegten Längsränder 13, 14 und die ins Innere des Schallschutzkäfigs 10 ragenden Kragen 17, 18 aneinander anliegen und eine weitere Kompression der schalldämmenden Elemente 23, 24 verhindern. Die Einhängeriegel 19 ragen im zusammengepressten Zustand des Schallschutzkäfigs 10 nicht über die Aussenflächen der Boden- und Deckplatte 11, 12 hinaus, da ihre Länge I kleiner ist als der Abstand w der Aussenflächen voneinander (Fig. 3). Dadurch weisen die Aussenflächen der Boden- und Deckplatte 11, 12 auch im zusammengepressten Zustand eine ebene Auflagefläche auf. Die relativ grosse, ebene Auflagefläche bietet insbesondere bei der Befestigung des Montagewinkels auf einer Montageschiene Vorteile.

Die Erfindung wurde am Beispiel eines Montagewinkels mit L-förmigem Winkelteil erläutert. Es versteht sich, dass das Winkelteil auch beispielsweise Z-förmig oder ähnlich ausgebildet sein kann. Der Schallschutzkäfig wurde am Beispiel von zwei leistenartigen, schalldämmenden Elementen erläutert, die vorzugsweise als extrudierte Gummiprofile vorliegen. Die Erfindung ist jedoch nicht allein auf die beschriebene Ausführungsvariante beschränkt. Der Schallschutzkäfig kann auch ein einteilig ausgebildetes Schallschutzelement umschliessen, das mit entsprechenden Öffnungen und Schlitzen für den innerhalb des Schallschutzkäfigs gelagerten Schenkel des Winkelteils ausgestattet ist.

## Patentansprüche

1. Montagewinkel, beispielsweise zur Befestigung von Blechkanälen und dergleichen, umfassend ein Winkelteil (2) mit wenigstens zwei, Bohrungen (5, 6) aufweisenden Schenkeln (3, 4), von denen einer in einem Gehäuse (10) gehalten ist, das eine Boden- und eine Deckplatte (11, 12) aufweist, wobei die Boden- und Deckplatte (11, 12) des Gehäuses (10) jeweils eine Bohrung (15, 16) aufweisen, die von einem in das Innere des Gehäuses (10) gezogenen Kragen (17, 18) berandet ist, und das Gehäuse (10) wenigstens ein schalldämmendes Element (23, 24) umschliesst, das den innerhalb des Gehäuses (10) angeordneten Bereich des Schenkels (4) wenigstens bereichsweise umgibt und allseitig im Abstand gegenüber dem Gehäuse (10) lagert, **dadurch gekennzeichnet, dass**
die Boden- und die Deckplatte (11, 12) zueinander umgelegte Längsränder (13, 14) zur Schaffung eines käfigartigen Gehäuses (10) aufweisen, die im Abstand (s) voneinander angeordnet sind, und dass der Kragen (17) zum Kragen (18) der gegenüberliegenden Bohrung einen axialen Abstand (k) aufweist, welcher dem Abstand (s) der Längsränder (13; 14) des käfigartigen Gehäuses (10) im Wesentlichen entspricht, und dass der innerhalb des käfigartigen Gehäuses (10) angeordnete Bereich des Schenkels (4) mit einem Langloch (6) ausgestattet ist, das breiter ist als der Aussendurchmesser der die Bohrungen (15, 16) in der Boden- und Deckplatte (11, 12) berandenden Kragen (17, 18).

2. Montagewinkel nach Anspruch 1, **dadurch gekennzeichnet, dass** der axiale Abstand (k) der Kragen (17, 18) voneinander die Wandstärke (t) des Schenkels (4) nicht wesentlich überschreitet.

3. Montagewinkel nach Anspruch 1 oder 2, **dadurch gekennzeichnet, dass** innerhalb des käfigartigen Gehäuses (10) zwei schalldämmende Elemente (23, 24), beispielsweise aus Gummi oder aus einem Elastomer, angeordnet sind, die etwa leistenartig ausgebildet sind und je eine Längsnut (25) aufweisen, in der die zugekehrte Längsseite (21, 22) des innerhalb des Gehäuses (10) angeordneten Bereichs des Schenkels (4) verschieblich gelagert ist.

4. Montagewinkel nach Anspruch 3, **dadurch gekennzeichnet, dass** die durch die Längsnut (25) gebildeten Gleitflächen des schalldämmenden Elements (23, 24) mit einer reibungsmindernden Beschichtung versehen sind.

5. Montagewinkel nach Anspruch 3 oder 4, **dadurch gekennzeichnet, dass** die leistenartigen, schalldämmenden Elemente (23, 24) durch Verschiebesicherungen (26), vorzugsweise Vorsprünge, die von der Boden- und/oder Deckplatte (11, 12) abragen, verschiebesicher im käfigartigen Gehäuse (10) gehalten sind.

6. Montagewinkel nach einem der vorangehenden Ansprüche, **dadurch gekennzeichnet, dass** die Boden- und die Deckplatte (11, 12) identisch ausgebildet sind und jeweils an einer Längsseite einen abragenden Einhängeriegel (19) und auf der gegenüberliegenden Seite eine dazu korrespondierende Aussparung (20) aufweisen.

7. Montagewinkel nach Anspruch 6, **dadurch gekennzeichnet, dass** die Aussenflächen der Boden- und Deckplatte (11, 12) des Gehäuses (10) bei einander berührenden Längsrändern (13, 14) einen axialen Abstand (w) voneinander aufweisen, der grösser ist als die Länge (1) der Einhängeriegel (19).

8. Montagewinkel nach einem der vorangehenden Ansprüche, **dadurch gekennzeichnet, dass** das freie Ende des das käfigartige Gehäuse (10) tragenden Schenkels (4) wenigstens einen, vorzugsweise abgeprägten, Anschlag (8) aufweist.

9. Montagewinkel nach einem der vorangehenden Ansprüche, **dadurch gekennzeichnet, dass** die Klemmkraft des innerhalb des Gehäuses (10) angeordneten schalldämmenden Elements (23, 24) auf die Längsränder (21, 22) des Schenkels (4) derart bemessen ist, dass der Schenkel (4) gegenüber dem Gehäuse (10) im vormontierten Zustand von Hand verschiebbar ist.

## Claims

1. Mounting bracket, for example for securing sheet metal ducts and the like, comprising a bracket component (2) with at least two limbs (3, 4) which have bores (5, 6) and of which one is held in a housing (10) that has a base plate (11) and a cover plate (12), the base and cover plates (11, 12) of the housing (10) each having a bore (15, 16) bordered by a collar (17, 18) drawn into the interior of the housing (10), and the housing (10) embracing at least one sound absorbing member (23, 24) which at least partially surrounds the part of the limb (4) arranged within the housing (10) and carries it so as to be spaced all round from the housing (10), **characterised in that** the base and the cover plates (11, 12) have longitudinal borders (13, 14) bent towards each other to create a cage like housing (10) and arranged at a spacing (s) from each other, and **in that** the collar (17) has an axial spacing (k) from the collar (18) of the opposite bore which corresponds substantially to the spacing (s) of the longitudinal borders (13, 14) of the cage like housing (10), and **in that** the part of the limb (4) arranged within the cage like housing (10) is provided with an elongated hole (6) which is wider than the outer diameter of the collars (17, 18) which border the bores (15, 16) in the base and cover plates (11, 12).

2. Mounting bracket according to claim 1, **characterised in that** the axial spacing (k) of the collars (17, 18) from each other does not substantially exceed the wall thickness (t) of the limb (4).

3. Mounting bracket according to claim 1 or 2, **characterised in that** two sound absorbing members (21, 22), formed somewhat strip like, for example of rubber or an elastomer, are arranged within the cage like housing (10), each having a longitudinal groove (25) in which is carried, so as to be displaceable therein, the facing longitudinal edge (21, 22) of the part of the limb (4) that is arranged within the housing (10).

4. Mounting bracket according to claim 3, **characterised in that** the slide surfaces formed by the longitudinal groove (25) of the sound absorbing members (23, 24) are provided with a friction reducing coating.

5. Mounting bracket according to claim 3 or 4, **characterised in that** the strip like sound absorbing members (23, 24) are held safe against displacement in the cage like housing (10) by displacement safety devices (26), preferably projections which jut out from the base and/or cover plate (11, 12).

6. Mounting bracket according to one of the preceding claims, **characterised in that** the base and the cover plates (11, 12) are shaped identically, each having at its longitudinal edge a jutting out interengaging locking bar (19) and at the opposite edge a recess (20) corresponding thereto.

7. Mounting bracket according to claim 6, **characterised in that** the outer surfaces of the base and cover plates (11, 12) of the housing (10), when the longitudinal borders (13, 14) are in contact, are at an axial spacing (w) from each other which is greater than the length (1) of the interengaging locking bar (19).

8. Mounting bracket according to one of the preceding claims, **characterised in that** the free end of the limb (4) that carries the cage like housing (10), has at least one, preferably embossed, abutment (8).

9. Mounting bracket according to one of the preceding claims, **characterised in that** the clamping force of the sound absorbing members (23, 24) which are arranged within the housing (10), against the longitudinal borders (21, 22) of the limb (4), is so dimensioned that the limb (4) can be displaced by hand with respect to the housing (10) whilst in the unmounted state.

## Revendications

1. Équerre de montage, par exemple pour la fixation de caniveaux en tôle et analogues, comprenant une partie d'équerre (2) avec au moins deux branches (3, 4) qui sont pourvues de trous (5, 6) et dont une est maintenue dans un boîtier (10) qui comporte des plaques de fond et de couvercle (11, 12), les plaques de fond et de couvercle (11, 12) du boîtier (10) comportant chacune un trou (15, 16) qui est bordé par un collet (17, 18) pénétrant à l'intérieur du boîtier (10), et le boîtier (10) enfermant au moins un élément d'insonorisation (23, 24) qui entoure au moins par endroits la zone de la branche (4) disposée à l'intérieur du boîtier (10) et la maintient de tous côtés à distance du boîtier (10), **caractérisée en ce que** les plaques de fond et de couvercle (11, 12) possèdent des bords longitudinaux repliés l'un vers l'autre (13, 14) pour créer un boîtier formant cage (10) et disposés à une distance (s) l'un de l'autre, **en ce que** le collet (17) présente, par rapport au collet (18) du trou opposé, une distance axiale (k) qui correspond sensiblement à la distance (s) entre les bords longitudinaux (13, 14) du boîtier formant cage (10), et **en ce que** la zone de la branche (4) disposée à l'intérieur du boîtier formant cage (10) est pourvue d'une trou oblong (6) qui est plus large que le diamètre extérieur des collets (17, 18) bordant les trous (15, 16) des plaques de fond et de couvercle (11, 12).

2. Équerre de montage selon la revendication 1, **caractérisée en ce que** la distance axiale (k) entre les collets (17, 18) n'excède pas sensiblement l'épaisseur de paroi (t) de la branche (4).

3. Équerre de montage selon la revendication 1 ou 2, **caractérisée en ce qu'**à l'intérieur du boîtier formant cage (10) sont disposés deux éléments d'insonorisation (23, 24), par exemple en caoutchouc ou en un élastomère, qui sont conformés sensiblement en barrettes et comportent chacun une rainure longitudinale (25) dans laquelle le côté longitudinal en vis-à-vis (21, 22) de la zone de la branche (4) disposée à l'intérieur du carter (10) est monté à coulissement.

4. Équerre de montage selon la revendication 3, **caractérisée en ce que** les surfaces de glissement de l'élément d'insonorisation (23, 24) formées par la rainure longitudinale (25) sont munies d'un revêtement antifriction.

5. Équerre de montage selon la revendication 3 ou 4, **caractérisée en ce que** les éléments d'insonorisation formant barrettes (23, 24) sont maintenus sans possibilité de coulissement dans le boîtier formant cage (10) par l'intermédiaire de moyens anticoulissement (26), de préférence par des saillies qui dépassent des plaques de fond et/ou de couvercle (11, 12).

6. Équerre de montage selon une des revendications précédentes, **caractérisée en ce que** les plaques de fond et de couvercle (11, 12) sont de conformation identique et comportent chacune, sur un côté longitudinal, un verrou d'accrochage saillant (19) et, sur le côté opposé, un évidement correspondant (20).

7. Équerre de montage selon la revendication 6, **caractérisée en ce que**, lorsque les bords longitudinaux (13, 14) se touchent l'un l'autre, les surfaces extérieures des plaques de fond et de couvercle (11, 12) du boîtier (10) présentent entre elles une distance axiale (w) qui est supérieure à la longueur (1) des verrous d'accrochage (19).

8. Équerre de montage selon une des revendications précédentes, **caractérisée en ce que** l'extrémité libre de la branche (4) portant le boîtier formant cage (10) comporte au moins une butée (8), de préférence matricée.

9. Équerre de montage selon une des revendications précédentes, **caractérisée en ce que** la force de serrage exercée par l'élément d'insonorisation (23, 24) disposé à l'intérieur du carter (10) sur les bords longitudinaux (21, 22) de la branche (4) est calculée de façon qu'à l'état prémonté la branche (4) puisse coulisser par rapport au boîtier (10).
